# EUROPÄISCHE PATENTSCHRIFT

(11) **EP 2 440 888 B1**
(45) Veröffentlichungstag und Bekanntmachung des Hinweises auf die Patenterteilung: **20.03.2019**
(21) Anmeldenummer: 10722991.6
(22) Anmeldetag: 17.05.2010
(51) Int. Cl.: G01F 1/66, G01F 23/296, G01P 5/24, G01S 15/12

(54) **VERFAHREN ZUM MESSEN EINER MESSGRÖSSE**
METHOD FOR MEASURING A MEASUREMENT VARIABLE
PROCÉDÉ DE MESURE D'UN MESURANDE

(30) Priorität: 12.06.2009 DE 102009026912; 24.08.2009 DE 102009028847
(43) Veröffentlichungstag der Anmeldung: 18.04.2012
(73) Patentinhaber: Endress+Hauser Flowtec AG, 4153 Reinach (CH)
(72) Erfinder: ÜBERSCHLAG, Pierre, F-68300 Saint-Louis (FR)
(74) Vertreter: Andres, Angelika Maria
(86) Internationale Anmeldenummer: PCT/EP2010/056683
(87) Internationale Veröffentlichungsnummer: WO 2010/142512

(56) Entgegenhaltungen:
- WO-A2-96/24027
- DE-A1- 19 934 212
- DE-A1-102008 010 090
- JP-A- 58 077 679

## Beschreibung

Die vorliegende Erfindung betrifft ein Verfahren zum Messen mindestens einer Messgröße mit Messignalen in Form von Ultraschallsignalen, wobei ein erster Sensor ein erstes Messsignal aussendet, und von einem zweiten Sensor empfangbar ist, und in einem zeitlichem Abstand t zum ersten Messsignal mindestens ein zweites Messsignal aussendet, wobei zumindest ein zweiter Sensor die Messsignale empfängt, wobei die Laufzeit TOF des Messsignals zwischen Aussenden des Messsignals und Empfangen des Messsignals bekannt ist.

Die vorliegende Erfindung betrifft ein Verfahren zur Bestimmung und/oder Überwachung einer Prozessgröße. Bei der Prozessgröße handelt es sich z.B. um den Volumen- oder Massedurchfluss eines Mediums durch ein Messrohr oder den Füllstand eines Füllguts in einem Behälter.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip. Beim Laufzeitdifferenz-Prinzip werden die unterschiedlichen Laufzeiten von Ultraschallimpulsen relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen. Reflexionen in der Flüssigkeit treten auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallwandler nur noch mit einem Spannverschluss an die Rohrwandung gepresst. Ein großer Vorteil von Clamp-On-Ultraschall-Durchflussmesssystemen ist, dass sie das Messmedium nicht berühren und auf eine bereits bestehende Rohrleitung angebracht werden. Derartige Systeme sind z. B. aus der EP 686 255 B1, US-A 44 84 478 oder US-A 45 98 593 bekannt.
Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen, so genannten Bursts, ermittelt.

Die WO09624027A2 beschreibt eine Pulsechomessung unter Berücksichtigung von Mehrfachreflektionen, um Entfernungen zu messen.
Die DE19934212A1 beschreibt ein Verfahren und eine Vorrichtung zum Messen einer Strömungsgeschwindigkeit eines Fluidstroms mittels Laufzeitdifferenzenmessung von akustischen Impulsen.
Die DE102008010090A1 beschreibt ein Verfahren zur Messung der Laufzeit eines Ultraschallpulses, wobei ein Einfluss von einer Dämpfung des Ultraschallsignals auf die Laufzeitmessung umgangen wird.
Die JP58077679A beschreibt ein Ultraschall-Entfernungsmessgerät, bei welchem ein Sender eine Messsignalfolge aussendet, welche von einem zu vermessenden Objekt reflektiert und von einem Empfänger empfangen werden, wobei der zeitliche Abstand benachbarter empfangener Signale der Laufzeit der Signale entspricht.

Die Ultraschallwandler bestehen normalerweise aus einem elektromechanischen Wandlerelement, z.B. ein piezoelektrisches Element, auch kurz Piezo genannt, und einer Koppelschicht, auch Koppelkeil oder seltener Vorlaufkörper genannt. Die Koppelschicht ist dabei meist aus Kunststoff gefertigt, das piezoelektrische Element besteht in der industriellen Prozessmesstechnik üblicherweise aus einer Piezokeramik. Im piezoelektrischen Element werden die Ultraschallwellen erzeugt und über die Koppelschicht zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich in erster Näherung nach dem Snell'schen Gesetz. Der Brechungswinkel ist somit abhängig von dem Verhältnis der Ausbreitungsgeschwindigkeiten in den Medien.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

Weiterhin sind aus dem Stand der Technik Füllstands-Messgeräte zur Ermittlung und Überwachung des Füllstands eines Füllguts in einem Behälter oder in einem offenen Gerinne mittels einer Laufzeitmessung von Ultra-/Schallsignalen bekannt, welche häufig in vielen Industriezweigen, z.B. in der Lebensmittelindustrie, der Wasser- und Abwasserbranche und in der Chemie, eingesetzt werden. Bei einer Laufzeitmessung werden Ultra-/Schallsignale in den Prozessraum bzw. das Behälterinnere ausgesendet; und die an der Oberfläche des Füllguts im Behälter reflektierten Echowellen werden von einem Sende-/Empfangselement empfangen. Aus der Zeitdifferenz zwischen dem Aussenden der Ultra-/Schallsignale und dem Empfang der Echosignale lässt sich der Abstand des Messgerätes zu der Füllgutoberfläche ermitteln. Vorrichtungen und Verfahren zur Bestimmung des Füllstandes über die Laufzeit von Ultraschallsignalen sowie auch von anderen Messsignalen, wie z.B. Radar nutzen die physikalische Gesetzmäßigkeit aus, wonach die Laufstrecke gleich dem Produkt aus der Laufzeit und der Ausbreitungsgeschwindigkeit ist. Unter Berücksichtigung der Geometrie des Behälterinnern und/oder des Behälters wird dann der Füllstand des Füllguts als relative oder absolute Größe ermittelt.

Die Erzeugung der Schallwellen bzw. Ultraschallwellen und das Ermitteln der reflektierten Echowellen nach einer abstandsabhängigen Laufzeit können durch separate Sendeelemente und Empfangselemente oder durch gemeinsame Sende-/Empfangselemente erfolgen. In der Praxis kommt meist nur ein einzelnes Sende-/Empfangselement, ein so genannter Ultraschäll-Transceiver, der ein Sendesignal erzeugt und zeitlich versetzt ein Reflexionssignal bzw. Echosignal empfängt, zum Einsatz. Den Ultraschall-Transceiver bildet beispielsweise ein Verbundschwingsystem, das aus der Literatur als Langevin-Schwinger bekannt ist. In der DE 29 06 704 A1 ist beispielsweise der Aufbau und die Funktionsweise eines solchen Schwingers beschrieben, der auch als Tonpilz-Resonator bezeichnet wird. Das Kernstück eines Tonpilz-Resonators ist ein piezoelektrisches Element, das mittels einer Befestigungsschraube zwischen einem Abstrahlelement und einem Gegenelement eingespannt wird und mit diesem zusammen das Verbundschwingsystem bildet.

Der elektromechanische Wandler, wie z.B. ein Piezoelement, wird in der Nähe einer seiner mechanischen Resonanzfrequenzen betrieben. Dadurch kann die Resonanzüberhöhung genutzt werden, um die Sendeamplitude zu vergrößern und die Empfindlichkeit beim Empfang zu erhöhen.

Ein generelles Problem bei Laufzeitdifferenzverfahren ist die Abgrenzung vom Nutzsignal von eventuellen Störsignalen, wie z.B. Reflexionen oder Rohrwellen.

Die Aufgabe der Erfindung besteht darin, ein Verfahren bereit zu stellen, mit welchem die Laufzeiten eines Messsignals zwischen einem Sender und einem Empfänger ermittelbar sind.

Die Aufgabe wird gelöst durch ein Verfahren zum Messen mindestens einer Messgröße mit Messignalen in Form von Ultraschallsignalen, wobei ein erster Sensor ein erstes Messsignal aussendet, welches erste Messsignal insbesondere mindestens eine Halbwelle einer Ultraschallwelle umfasst, insbesondere ein Burst-Signal ist, und in einem zeitlichem Abstand t zum ersten Messsignal mindestens ein zweites Messsignal aussendet, welches insbesondere gleich dem ersten Messsignal ist, wobei zumindest ein zweiter Sensor die Messsignale empfängt, wobei der zeitliche Abstand t so gewählt wird, dass eine Amplitude eines empfangenen Messsignals am zweiten Sensor maximal wird.

Der Erfindung liegt das folgende Prinzip zu Grunde: Die vom ersten Sensor ausgesendeten Messsignale, also insbesondere das erste und das zweite Messsignal, werden am zweiten Sensor reflektiert. Um die bestmögliche Signalstärke zu erhalten, können die Reflexionen mit dem Messsignal selbst so überlagert werden, dass die Amplitude maximal wird. Dies ist durch eine zeitliche Verschiebung von t zu erreichen.

Gemäß des erfindungsgemäßen Verfahrens wird der zeitliche Abstand t so gewählt, dass die Amplitude des vom zweiten Sensor empfangenen Messsignals aus einer Überlagerung von zweitem Messsignal und von vom zweiten Sensor zum ersten Sensor und wieder zurück zum zweiten Sensor reflektierten ersten Messsignal, maximal ist.

Eine Weiterbildung der Erfindung sieht vor, dass der zeitliche Abstand t über einen vorgegebenen Bereich variiert wird. Dazu werden beispielsweise viele Messsignale mit einem konstanten Abstand t zueinander vom ersten zum zweiten Sensor gesendet. Nach einer Einschwingzeit T, ist die vom zweiten Sensor gemessene Amplitude bei sonst gleich bleibenden

Systemeigenschaften, wie z.B. Durchfluss und/oder Füllstand, konstant, d.h. sie ändert sich über einen gewissen Zeitraum nicht. Diese Amplitude wird zusammen mit dem Abstand t in einem Speicher gehalten. Danach wird der Abstand t verändert. Dies wird wiederholt, Fachmänner sprechen von einem sweep. Dies kann so lange wiederholt werden, bis ein Abbruchkriterium erfüllt ist und der zur maximalen aufgezeichnete Amplitude gehörende Abstand zwischen den Messsignalen wird eingestellt. Der Zeitpunkt des Abbrechens des Sweeps ist ein klassisches Optimierungsproblem, mit den für den Fachmann bekannten Optimierungsverfahren durchzuführen.

In einer weiteren Weiterbildung der erfindungsgemäßen Lösung wird mittels des zeitlichen Abstands t die Schallgeschwindigkeit eines durchschallten Messmediums ermittelt, welches z.B. durch ein Messrohr strömt, und/oder mittels des zeitlichen Abstands t wird der Füllstand eines Messmediums in einem Behälter ermittelt. Diese Ausgestaltung der Erfindung benötigt keine weitere aufwendige Signalverarbeitung, um die Schallgeschwindigkeit oder den Füllstand zu ermitteln.

Die Aufgabe wird weiterhin gelöst durch eine Weiterbildung des erfindungsgemäßen Verfahrens, wobei die Laufzeit TOF₁ des Messsignals zwischen Aussenden des Messsignals und Empfangen der Messsignale bekannt ist, wobei der zeitliche Abstand t so gewählt wird, dass der zeitliche Abstand t so gewählt wird, dass er ein ganzzahliges Vielfaches der Laufzeit TOF₁ ist oder dass zusätzlich die Laufzeit TOF₂ eines dritten Messsignals zwischen Aussenden des dritten Messsignals vom zweiten Sensor und Empfangen des dritten Messsignals vom ersten Sensor bekannt ist und der zeitliche Abstand t so gewählt wird, dass er die durch eine natürliche Zahl n geteilte Summe von TOF₁ und TOF₂ ist, z.B. dass der zeitliche Abstand t ein ganzzahliges Vielfaches des Mittelwerts der Laufzeiten TOF₁ und TOF₂ ist, d.h. dass der zeitliche Abstand t so gewählt wird, dass er ein ganzzahliges Vielfaches von (TOF₁ + TOF₂)/2 ist. In einem Beispiel beträgt t 2*(TOF₁ + TOF₂)/2, d.h. t = TOF₁ + TOF₂. Erster und zweiter Sensor sind im Falle eines Auswertens des dritten Messsignals sowohl als Sender ais auch als Empfänger einsetzbar. Mit diesem Verfahren ist ein Messsignal an einem Sender so gestaltbar, dass das am Empfänger ankommende Messsignal deutlich empfangbar ist, d.h. die Signalamplitude ist gegenüber dem Stand der Technik deutlich verbessert.

Die Messsignale weisen jeweils mindestens eine Halbwelle einer mechanischen Welle oder einer elektromagnetischen Welle auf. Dies gilt sowohl für das erste Messsignal, als auch für das zweite und eventuell dritte Messsignal. Physikalisch transportiert eine Welle Energie, wobei eine mechanische Welle, z.B. eine Schallwelle, sich durch eine Schwingung einer Kette elastisch gekoppelter Massen, wie. z.B. Teilchen eines Mediums, ausbreitet, wobei die Massen nicht dauerhaft,verschoben werden. Elektromagnetische Wellen hingegen benötigen kein Medium und sind auch im Vakuum ausbreitungsfähig. Bekannte Beispiele für elektromagnetische Wellen sind Radiowellen oder Licht. Eigenschaften einer Welle lassen sich z.B. über ihre Parameter Amplitude, ihre Ausbreitungsgeschwindigkeit und Frequenz bzw. Wellenlänge beschreiben. Wellen können als periodische Wellen oder als Stoßwellen auftreten. Daher können Halbwellen auch verschiedene Formen annehmen, z.B. eine Sinus-Form, eine Rechteck- oder eine DreieckForm. Eine Welle wird theoretisch über ihre Wellengleichung beschrieben, welche eine Auslenkung von einer Nulllinie aus gesehen an einem Ort zu einem bestimmten Zeitpunkt ergibt. Eine extreme Ausprägung einer Halbwelle wäre so z.B. ein Dirac-Stoß, welcher sich durch einen Raum ausbreitet. Eine Halbwelle wird allgemein durch Nullstellen begrenzt und ist positiv oder negativ. Ihre Zeitdauer entspricht einer halben Periodendauer der Welle. Schließt eine negative Halbwelle an eine positive Halbwelle gleicher Amplitude und gleicher Wellenlänge direkt an, ist also der zeitliche Abstand t vom Beginn der positiven Halbwelle bis zum Beginn der negativen Halbwelle λ/2, so entsteht eine Welle einer Periodendauer λ. Ein Signal aus mehreren Halbwellen kann somit verschiedene Frequenzen umfassen.

In zeitlichem Abstand t zum ersten Messsignal wird vom ersten Sensor mindestens ein weiteres, zweites Messsignal, also mindestens eine weitere, zweite Halbwelle, ausgesendet. Dies geschieht einer Ausprägung des erfindungsgemäßen Verfahrens zufolge insbesondere nach dem ersten Messsignal, also nach der ersten Halbwelle. Wird der zeitliche Abstand t berechnet, ausgehend vom Beginn des ersten Messsignals, also insbesondere vom Beginn der ersten Halbwelle des ersten Messsignals, d.h. also wenn die Amplitude der ersten Halbwelle des ersten Messsignals ungleich Null wird, wie in einer Weiterbildung des erfindungsgemäßen Verfahrens offenbart, dann kann, dieser oben genannten Ausprägung der Erfindung zufolge, das zweite Messsignal, also der Beginn der zweiten Halbwelle frühestens λ/2 nach dem Beginn der ersten Halbwelle erfolgen. Allgemein liegt t im Intervall [0, T], wobei T endlich groß ist.

Nun sind weitere Ausführungsformen der erfindungsgemäßen Lösung denkbar, was die Definition des Start-Zeitpunkts für die Bestimmung der Laufzeiten TOF₁ und/oder TOF₂ und damit auch für die Bestimmung des zeitlichen Abstands t der Messsignale zueinander betrifft, wie sie weiter unten näher ausgeführt sind.

Der zeitliche Abstand t zwischen Aussenden des ersten Messsignals vom ersten Sensor und Aussenden des zweiten Messsignals vom ersten Sensor ist in einer Ausführungsform ein ganzzahliges Vielfaches der Laufzeit TOF₁ des ersten Messsignals zwischen Aussenden des ersten Messsignals vom ersten Sensor und Empfangen des ersten Messsignals vom zweiten Sensor. D.h. das Aussenden des zweiten Messsignals wird entsprechend an die Laufzeit des ersten Messsignals angepasst.

Die Messsignale werden von zumindest einem weiteren, zweiten Sensor empfangen. In einer Ausgestaltung der Erfindung ist der zweite Sensor konstruktiv gleich ausgestaltet wie der erste Sensor. Insbesondere handelt es sich um Ultraschallwandler eines Füllstandsmessgeräts oder eines Durchflussmessgeräts.

In einem anderen Fall ist der zeitliche Abstand t so gewählt wird, dass er ein ganzzahliges Vielfaches des Mittelwerts der Laufzeiten TOF₁ und TOF₂ ist.
Die Laufzeiten TOF₁ und/oder TOF₂ der Messsignale zwischen Aussenden des jeweiligen Messsignals und Empfangen des entsprechenden Messsignals sind bekannt. Gemäß einer Weiterbildung des erfindungsgemäßen Verfahrens werden die Laufzeit TOF₁ und/oder TOF₂ mittels einer Messung bestimmt - sie werden gemessen. Die Laufzeit TOF₂ ist messbar zwischen dem Aussenden des dritten Messsignals vom zweiten Sensor und dem Empfangen des dritten Messsignals vom ersten Sensor.

Nun zu den oben bereits angedeuteten weiteren Ausführungsformen der erfindungsgemäßen Lösung, was die Definition des Start-Zeitpunkts für die Bestimmung der Laufzeiten TOF₁ und/oder TOF₂ und damit auch für die Bestimmung des zeitlichen Abstands t der Messsignale zueinander betrifft. So wird beispielsweise eine steigende oder fallende Flanke des entsprechenden Messsignals als Start- oder Stop-Trigger verwendet. Nimmt also die erste Ableitung eines Messsignals einen bestimmten Wert an, so gilt dieser Zeitpunkt als Beginn des Messsignals. Eine weitere Alternative besteht darin, einen Wendepunkt im Messsignal als Beginn des Messslgnals heranzuziehen, ein Amplitudenmaximum. Die bisher aufgezeigten Varianten besitzen den Nachteil der schlechten Differenzierung zwischen einem Rauschen und dem eigentlichen Messsignal. Gemäß einer Weiterbildung wird die Laufzeit TOF₁ des ersten Messsignals zwischen Aussenden des ersten Messsignals vom ersten Sensor und Empfangen des ersten Messsignals vom zweiten Sensor bestimmt zwischen den Zeitpunkten einer ersten Überschreitung eines vorgebbaren ersten Schwellwerts des ersten Messsignals am ersten Sensor und einer ersten Überschreitung eines vorgebbaren zweiten Schwellwerts des ersten Messsignals am zweiten Sensor. Eine Variante ist in der Gleichheit des ersten und des zweiten Schwellwerts zu sehen. Die Überschreitung eines Schwellwerts als auslösendes Ereignis bzw. Triggerung von Messungen kann alleine oder in Kombination mit den vorgenannten Merkmalen Verwendung finden. Der jeweilige End-Zeitpunkt ist entsprechend gleich gewählt. Diese Liste erhebt keinen Anspruch auf Vollständigkeit. Weitere Möglichkeiten zur Bestimmung der Laufzeit TOF₁ sind aus dem Stand der Technik bekannt. Analoges gilt natürlich auch für das dritte Messsignal bzw. die Laufzeit TOF2 des dritten Messsignals. Die Laufzeit TOF₂ des dritten Messsignals zwischen Aussenden des dritten Messsignals vom zweiten Sensor und Empfangen des dritten Messsignals vom ersten Sensor wird bestimmt zwischen den Zeitpunkten einer ersten Überschreitung eines vorgebbaren Schwellwerts des dritten Messsignals am zweiten Sensor und einer ersten Überschreitung des Schwellwerts des dritten Messsignals am ersten Sensor.

Entsprechend wir der zeitliche Abstand t des Messsignals zwischen Aussenden des ersten Messsignals vom ersten Sensor und Aussenden des zweiten Messsignals vom ersten Sensor gemäß einer Weiterbildung der erfindungsgemäßen Lösung bestimmt zwischen den Zeitpunkten einer ersten Überschreitung eines bestimmten ersten Schwellwerts des ersten Messsignals am ersten Sensor und einer ersten Überschreitung eines bestimmten dritten Schwellwerts des zweiten Messsignals am ersten Sensor. Der erste und der dritte Schwellwert und/oder der oben erwähnte zweite Schwellwert können wiederum gleich sein.

Stehen sich beispielsweise zwei Ultraschallsensoren eines Durchflussmessgeräts auf einer Linie gegenüber, mit einem vorgegebenen Winkel zur Hauptströmungsrichtung eines Messmediums in einem Messrohr geneigt, sendet der erste Ultraschallsensor, der Sender, ein erstes Messsignal zum zweiten Sensor, dem Empfänger, und anschließend sendet umgekehrt der zweite Sensor, nun der Sender, ein drittes Messsignal zum nun als Empfänger fungierenden ersten Sensor, um aus den unterschiedlichen Laufzeiten TOF₁ und TOF₂ der beiden Messsignale zwischen den Sensoren, bedingt durch die Strömung des Messmediums im Messrohr, den Durchfluss des Messmediums durch das Messrohr zu errechnen. Der jeweilige Empfänger empfängt außer dem zur Bestimmung der Laufzeit herangezogenen Signal auch weitere Signale, verursacht durch Reflexionen. Neben den störenden Reflexionen, z.B. der Reflexion des Messsignals an der Rohrwand, tritt auch eine Reflexion am jeweiligen Sender selbst auf. Die Erste dieser Reflexionen wird vom Empfänger typischerweise zwei Laufzeiten TOF₁ + TOF₂ nach dem Eintreffen des Messsignals registriert. Weitere gleichartige Reflexionen treten in weiteren Abständen von zwei Laufzeiten TOF₁ + TOF₂ auf. Werden die Messsignale vom Sender nun mit einem Abstand von zwei Laufzeiten TOF₁ + TOF₂ ausgesendet, überlagern sich die Messsignale mit den genannten Reflexionen am Empfänger und das nutzbare Messsignal wird deutlich verstärkt. Analoges gilt für die Füllstandsmessung, nur mit dem Unterschied, dass die Laufzeiten TOF₁ und TOF₂ gleich sind, da kein Messmedium den Schall "mitnimmt". Das Laufzeitdifferenzprinzip in der Durchflussmessung wird daher auch oft als "Schallmitnahmeverfahren" bezeichnet. Daher kann in der Anwendung des erfindungsgemäßen Verfahrens in der Füllstandmesstechnik auch auf die Bestimmung des TOF₂ verzichtet werden. Es gilt: 2* TOF₁ = TOF₁ + TOF₂.

Ein Messsignal wird gemäß einer Ausgestaltung der Erfindung somit zur Bestimmung der Laufzeit TOF₁ und/oder TOF₂ des Messsignals vom Sender zum Empfänger gesendet. Der Abstand der weiteren Messsignale zueinander wird nun gemäß der vorliegenden Gegebenheiten auf ein ganzzahliges Vielfaches dieser Laufzeit TOF₁ eingestellt, z.B. auf das Zweifache, oder eben auf ein ganzzahliges Vielfaches von (TOF₁ + TOF₂)/2.

Speziell in der Durchflussmessung mit Ultraschall werden Wellenpakete, z.B. mit 8, 16 oder 32 Bursts in schneller Reihenfolge nacheinander von einem ersten Sensor durch das Messmedium zu einem zweiten Sensor geschickt. Dabei kann das Messsignal auf direktem Wege zwischen den beiden Sensoren verlaufen, falls beide Sensoren sich gegenüberstehen, oder das Messsignal wird an dem Messrohr zu den Sensoren reflektiert. So wird die Laufzeit des Messsignals in eine Richtung bestimmt. Nach einer kurzen Pause werden die Funktionen der Sensoren umgekehrt. Nun sendet der zweite Sensor die Wellenpakete zum ersten Sensor., Das Ergebnis ist die Laufzeit des Messsignals in die andere Richtung. Anhand beider Laufzeiten kann nun die Durchflussgeschwindigkeit des Messmediums im Messrohr und damit dann der Durchfluss des Messmediums im Messrohr bestimmt werden. Dieses Verfahren wird ständig wiederholt. Nach dem erfindungsgemäßen Verfahren könnte nun beispielsweise ein einzelnes Burst-Signal, respektive zwei Burst-Signale in beide Richtungen, den Wellenpaketen vorgeschaltet werden. Anhand dieses Wellenpakets wird die Laufzeit TOF₁ des Messsignals bzw. der Laufzeiten TOF₁ und TOF₂ der Messsignale von einem Sensor zum anderen erfasst. Der zeitliche Abstand t zwischen den einzelnen Bursts der nachfolgenden Wellenpakete wird dann anhand der Laufzeiten TOF₁ und TOF₂ bestimmt, er wird beispielsweise auf t = 2*TOF₁ eingestellt, oder auf t = TOF₁ + TOF₂.

Im Rahmen des erfindungsgemäßen Verfahrens sind die Messsignale und die Reflexionen der Messsignale an den Sensoren so aufeinander abgestimmt, dass sie sich gegenseitig verstärken.

Dabei wird der zeitliche Abstand t des Messsignals zwischen Aussenden des ersten Messsignals vom ersten Sensor und Aussenden des zweiten Messsignals vom ersten Sensor nach dem erfindungsgemäßen Verfahren so gewählt, dass die Amplitude eines empfangenen Messsignals am zweiten Sensor maximal wird.

Einer weiteren Weiterbildung der Erfindung gemäß wird mittels des zeitlichen Abstands t und mittels eines zeitlichen Abstands x zwischen Aussenden des zweiten Messsignals vom ersten Sensor und Empfangen eines Messsignals vom zweiten Sensor die Strömungsgeschwindigkeit eines Messmediums in einem Messrohr ermittelt.

Ist der Durchmesser des Messrohrs ebenfalls bekannt; kann somit auch der Durchfluss des Messmediums durch das Messrohr ermittelt werden. Alternativ kann dies mittels des zeitlichen Abstands t und der Laufzeit TOF₁ geschehen. Mathematisch ist diese Alternative mit der genannten Weiterbildung gleichzusetzen, wobei messtechnisch nicht die Laufzeit TOF₁ direkt gemessen wird, sondern lediglich der zeitliche Abstand x zwischen Aussenden des ersten Messsignals vom ersten Sensor und Empfangen des Messsignals vom zweiten Sensor. Vorteilhaft geschieht dies, wenn der Abstand t so gewählt ist, dass x kleiner t/2 ist, insbesondere dass gilt: t = TOF₁ - x.

Die Erfindung wird anhand der nachfolgenden Figuren näher erläutert, in denen jeweils ein Ausführungsbeispiel dargestellt ist. Gleiche Elemente sind in den Figuren mit gleichen Bezugszeichen versehen.
- Fig. 1: zeigt zwei sich gegenüberstehende Ultraschallsensoren eines Ultraschall-Durchflussmessgeräts,
- Fig. 2: zeigt den zeitlichen Verlauf der Messsignale am zweiten Sensor ohne Anwendung des erfindungsgemäßen Verfahrens,
- Fig. 3: zeigt den zeitlichen Verlauf der Messsignale am ersten und zweiten Sensor überlagert unter Anwendung des erfindungsgemäßen Verfahrens,
- Fig. 4: zeigt ein Füllstandsmessgerät mit zwei Ultraschallsensoren,
- Fig. 5: zeigt zeitliche Amplitudenverläufe am ersten und zweiten Sensor.

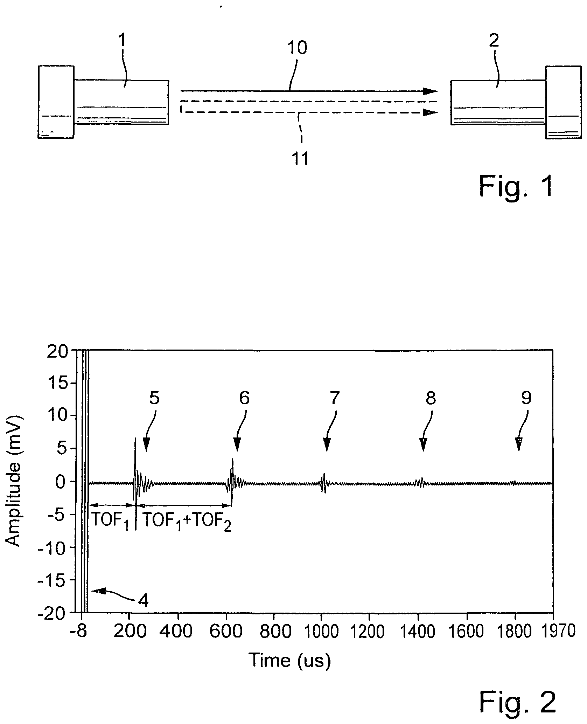

In Fig. 1 ist ein Inline-Ultraschall-Durchflussmessgerät mit zwei sich gegenüberstehenden Ultraschallsensoren schematisch dargestellt. Der erste Sensor 1 sendet Ultraschallsignale zum zweiten Sensor 2. Eingezeichnet sind der direkte, erste Signalpfad 10, also der direkte Weg eines Messsignals vom ersten Sensor 1 zum zweiten Sensor 2, und das Messsignal, welches vom zweiten Sensor 2 zurück zum ersten Sensor 1 und von dort wieder zurück zum zweiten Sensor 2 reflektiert wird, also der zweite Signalpfad 11. Die Reflektion vom ersten Sensor 1 zum zweiten Sensor 2 zeigt dabei in die Richtung des ersten Messsignals. Eine solche Reflektion kann sich natürlich mehrmals wiederholen.

Zu dieser Anordnung offenbart nun Fig. 2 den zeitlichen Amplitudenverlauf am zweiten Sensor. Zusätzlich ist der Burst 4 am ersten Sensor einbeschrieben. Neben dem Burst 4 am ersten Sensor, zeigt das Diagramm das ankommende direkte Messsignal 5, detektiert vom zweiten Sensor, und die Reflektionen 6-9, wie sie ebenfalls vom zweiten Sensor gemessen werden. Zwischen dem Burst 4 und dem direkten Messsignal 5, gemessen vom zweiten Sensor, vergeht die Laufzeit TOF₁ des Messsignals vom ersten zum zweiten Sensor. Wie in Fig. 1 beschrieben, wird das Messsignal nun vom zweiten Sensor zum ersten Sensor und wieder zurück zum zweiten Sensor reflektiert. Dabei legt es natürlich den doppelten Weg zurück, was aber nicht unbedingt bedeutet, dass es auch die doppelte Laufzeit TOF₁ zurücklegt. Denn da das Messmedium zwischen den Ultraschallsensoren 1 und 2 fließt, wird der Schall vom Medium "mitgenommen" - es wird die Tatsache ausgenutzt, dass die Ausbreitungsgeschwindigkeit von Ultraschallwellen in einem Medium von dessen Fließgeschwindigkeit direkt beeinflusst wird. Das Gleiche gilt für die weiteren Reflexionen 7, 8 und 9.

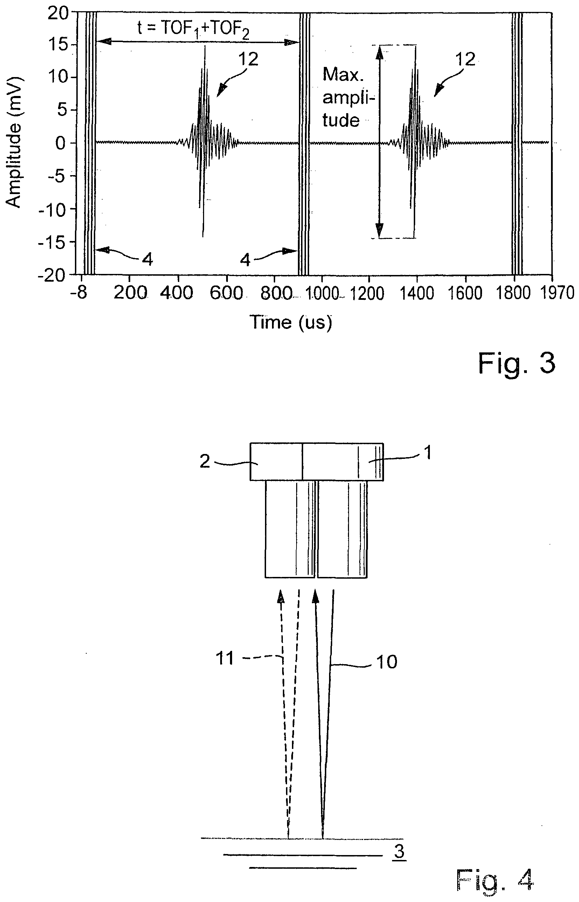

Wird nun der zeitliche Abstand t zwischen zwei Bursts 4, welche vom ersten Sensor zum zweiten Sensor gesendet werden, auf ein ganzzahliges Vielfaches von (TOF₁ + TOF₂)/2, hier auf TOF₁ + TOF₂, eingestellt, so misst der zweite Sensor ein Signal überlagert aus dem direkten Messsignal 5 und den Reflektionen 6-9, insbesondere aus dem direkten Messsignal 5 und der ersten Reflektion 6, wie in Fig. 3 skizziert. Durch die Phasengleichheit des direkten Messsignals 5 und der Reflektionen 6-9, insbesondere der ersten Reflektion 6, kommt es zur gegenseitigen Verstärkung der Signale und damit zu einem deutlich empfangbaren Signal.

Das Messsignal wird am Sender entsprechend bestimmter Prozessgrößen so gestaltet, dass das am Empfänger ankommende Messsignal deutlich empfangbar ist. Die aufeinander folgenden Wellen sind so bestimmt, dass sie sich gegenseitig verstärken. Die Laufzeiten TOF₁ und TOF₂ sind abhängig von gewissen Prozessgrößen; wie z.B. der Schallgeschwindigkeit im Messmedium, von geometrischen Größen, wie z.B. dem Abstand der beiden Sensoren zueinander, und natürlich vom Durchfluss des Messmediums durch das Messrohr.

Gleichermaßen zeigt Fig. 3 die maximale Amplitude im eingeschwungenen Systemzustand an, welche am zweiten Sensor gemessen wird. Erfindungsgemäß kann der Abstand t der beiden Burts 4 variiert werden, bis die Amplitude des am zweiten Sensor gemessenen Signals maximal ist. Der Abstand t beträgt in diesem Beispiel dabei gewöhnlicherweise die Summe aus TOF₁ und TOF₂ geteilt durch eine natürliche Zahl.

Fig. 4 illustriert ein Füllstandmessgerät mit zwei Ultraschallsensoren. Dabei sind die Ultraschallsensoren 1 und 2 parallel zur Oberfläche des Messmediums 3 angeordnet. Sowohl der erste Signalpfad 10 des direkten Messsignals, als auch der zweite Signalpfad 11 der Reflexionen sind eingezeichnet. TOF₁ und TOF₂ wären hier natürlich gleich, weshalb auf eine Erfassung von TOF₂ mittels eines dritten Messsignals verzichtet wird. Die Sensoren 1 und 2 können dann speziell als reine Sender oder Empfänger ausgestaltet sein.

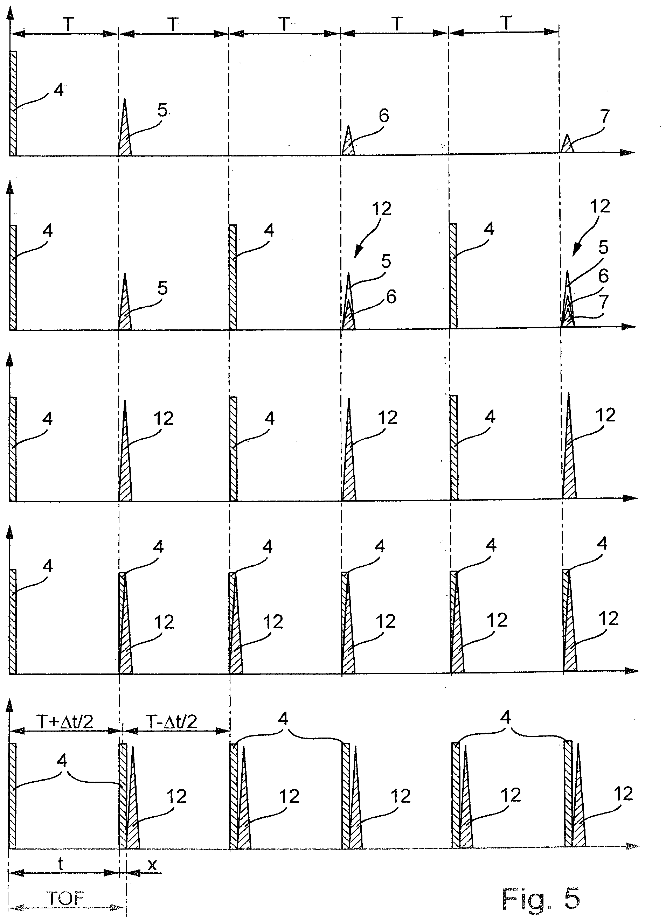

Fig. 5 zeigt sowohl die vom ersten Sensor ausgesandten, als auch die vom zweiten Sensor empfangenen Amplitudenverläufe zusammen in mehreren idealisierten, zeitlichen Darstellungen untereinander, bezogen auf ein Versuchsaufbau, wie ihn die Fig. 1 zeigt, mit zwei sich gegenüberstehenden Ultraschallsensoren hier zur Messung eines Durchflusses eines Messmediums in einem Messrohr, welches sich zwischen den beiden Ultraschallsensoren befindet. Die vom ersten Sensor ausgesendeten Messsignale weisen dabei Rechteckform auf.

Die vom zweiten Sensor empfangenen Signale 12 sind hingegen als Dreiecke dargestellt. Die Ordinaten weisen die Signalamplituden qualitativ aus, auf den Abszissen ist die Zeit aufgetragen.

Im ersten Amplitudenverlauf ist ein erstes Messsignal vom ersten Sensor zum Zeitpunkt Null in Form eines Bursts 4 ausgesandt. Nach einer Zeit T wird es, als direktes Messsignal 5, vom zweiten Sensor empfangen. Danach wird es zurück zum ersten Sensor reflektiert, was wieder die Zeit T benötigt, wenn das Messmedium im Messrohr keine Strömung aufweist, also in Ruhe ist. Empfangen wird es vom ersten Sensor nicht, da in diesem Beispiel der erste Sensor nur als Ultraschall-Sender und der zweite Sensor lediglich als Ultraschall-Empfänger ausgestaltet sind. Nach einer weiteren Periode T ist das Messsignal ein weiteres Mal reflektiert, nun vom ersten Sensor wieder zurück zum zweiten Sensor, und wird als erstes Echo 6 vom zweiten Sensor registriert. Das zweite Echo 7 und dritte Echo entstehen gleichermaßen durch Reflektionen des ersten Echos 6, respektive des zweiten Echos 7.

Wird nun, bei genanntem Versuchsaufbau mit einem Messmedium in Ruhe, vom ersten Sensor ein weiterer Burst 4, also ein zweites Messsignal, mit einem Abstand von 2*T ausgesandt, so überlagern sich das erste Echo 6 des ersten Bursts mit dem direkten Messsignal 5 des zweiten Bursts 4 am zweiten Sensor, sowie das zweite Echo 7 des ersten Bursts mit dem ersten Echo 6 des zweiten Bursts und dem direkten Messsignal 5 eines dritten Bursts 4 am zweiten Sensor.

So werden die Amplituden der vom zweiten Sensor empfangenen Messsignale 12, durch die genannten Überlagerungen, maximal, wie der dritte Amplitudenverlauf verdeutlicht, wobei hier zum Zeitpunkt kleiner Null bereits Messsignale vom ersten Sensor ausgesendet werden.

Die Einstellung des Abstands t zwischen den vom ersten Sensor auszusendenden Messsignalen 4, also insbesondere zwischen erstem und zweitem Messsignal, welcher hier 2*t beträgt, kann geschehen durch Messen des TOF, hier des TOF₁, welches hier in diesem Signalverlauf gleich T ist, und entsprechendes einstellen von t oder durch variieren des Abstands t zwischen den zwei vom ersten Sensor auszusendenden Messsignalen 4, also zumindest zwischen einem ersten und einem zweiten Messsignal, hier dem ersten Burst 4 und dem zweiten Burst 4, bis die Amplitude des vom zweiten Sensor empfangenen Messsignals 12 maximal wird.

In der vierten zeitlichen Überlagerung der Signale von ersten und zweiten Sensor beträgt nun der zeitliche Abstand zweier vom ersten Sensor ausgesendeten Messsignale T, anstatt 2*T wie oben. Damit fallen die vom zweiten Sensor erfassten Messsignale 12 zeitlich zusammen mit denen vom ersten Sensor ausgesandten Messsignale 4. Dies gilt für Null-Durchfluss.

Ist der Durchfluss des durchschallten Messmediums im Messrohr ungleich Null, so ist ein Ultraschallsignal in Richtung der Strömung des Messmediums durch das Messrohr schneller, als ein Ultraschallsignal entgegen der Strömung des Messmediums durch das Messrohr. Dieses physikalische Prinzip wird zur Laufzeitdifferenzmessung genutzt. Nun besteht die Annahme, dass eine nicht zu vernachlässigende Geschwindigkeitskömponente der Strömung des Messmediums im Messrohr entgegen der Richtung des ersten Messsignals, also in Richtung vom ersten Sensor zum zweiten Sensor, zeigt.

Das erste Messsignal 4 wird vom ersten Sensor zum zweiten Sensor ausgesendet, dort zurück zum ersten Sensor reflektiert und hier wiederum reflektiert zum zweiten Sensor. Dabei ist es auf dem Weg vom ersten Sensor zum zweiten Sensor langsamer und vom zweiten Sensor zum ersten Sensor schneller. Da nun das erste, wie auch alle weiteren Echos, die Strecke vom ersten Sensor zum zweiten Sensor und zurück zurücklegen, heben sich die Geschwindigkeitsunterschiede auf und es bleibt nur der Einfluss der Geschwindigkeitskomponente des Messmediums auf das direkte, erste Messsignal vom ersten Sensor zum zweiten Sensor. Also das erste Messsignal ist vom ersten Sensor zum zweiten Sensor langsamer als bei einer Null-Strömung. Das Signal der Reflektion vom zweiten zum ersten Sensor ist zwar schneller unterwegs, diese Zeit im Vergleich zur Null-Strömung braucht aber die Reflektion vom ersten zum zweiten Sensor wieder länger. So dass die vom zweiten Sensor gemessenen Signale 12 um eine Zeit x im Vergleich zur Null-Strömung versetzt sind. Diese Zeit x ist die Differenz aus TOF₁ und t, es gilt: x = TOF₁ - t und x entspricht dabei der Hälfte der herkömmlicherweise ermittelten Laufzeitdifferenz Δt zwischen den Messsignalen in und entgegen der Strömungsrichtung, bzw. der Geschwindigkeitskomponente, des Messmediums im Messrohr, also x = Δt/2. Es kann aber nicht nur TOF₁ gemessen werden, wie üblich, sondern es kahn die Zeit x direkt gemessen werden, was messtechnische Vorteile bietet. Da auch die Zeit t bekannt ist, lässt sich somit die Strömungsgeschwindigkeit, und bei bekanntem Durchmesser des Messrohrs auch der Durchfluss des Messmediums durch das Messrohr ermitteln.

### Bezugszeichenliste

- 1: Erster Ultraschallsensor
- 2: Zweiter Ultraschallsenor
- 3: Messmedium
- 4: Burst-Signal
- 5: Direktes Messsignal
- 6: Erste Reflektion
- 7: Zweite Reflektion
- 8: Dritte Reflektion
- 9: Vierte Reflektion
- 10: Erster Signalpfad
- 11: Zweiter Signalpfad
- 12: Überlagerte Messsignale

## Patentansprüche

1. Verfahren zum Messen mindestens einer Messgröße mit Messsignalen in Form von Ultraschallsignalen, wobei ein erster Sensor (1) ein erstes Messsignal aussendet und in einem zeitlichen Abstand t zum ersten Messsignal mindestens ein zweites Messsignal aussendet, wobei zumindest ein zweiter Sensor (2) die Messsignale empfängt,
**dadurch gekennzeichnet,**
**dass** der zeitliche Abstand t so gewählt wird, dass die Amplitude eines vom zweiten Sensor (2) empfangenen Messsignals aus einer Überlagerung von zweitem Messsignal und Reflexionen des ersten Messsignals maximal ist, wobei
das erste Messsignal am zweiten Sensor (2) zum ersten Sensor (1) reflektiert wird und vom ersten Sensor (1) wieder zurück zum zweiten Sensor (2) reflektiert wird und dass das zweite
Messsignal mit dem vom ersten Sensor (1) zum zweiten Sensor (2) reflektierten ersten Messsignal überlagert wird.

2. Verfahren zum Messen mindestens einer Messgröße nach Anspruch 1,
**dadurch gekennzeichnet,**
**dass** der zeitliche Abstand t über einen vorgegebenen Bereich variiert wird.

3. Verfahren zum Messen mindestens einer Messgröße nach einem der Ansprüche 1 oder 2, **dadurch gekennzeichnet,**
**dass** mittels des zeitlichen Abstands t die Schallgeschwindigkeit eines Messmediums ermittelt wird und/oder dass mittels des zeitlichen Abstands t der Füllstand eines Messmediums in einem Behälter ermittelt wird.

4. Verfahren zum Messen mindestens einer Messgröße nach einem der Ansprüche 1 bis 3, **dadurch gekennzeichnet,**
**dass** eine Laufzeit (TOF₁) die Laufzeit des ersten Messsignals zwischen Aussenden des ersten Messsignals vom ersten Sensor und Empfangen des ersten Messsignals vom zweiten Sensor ist und wobei eine Laufzeit (TOF₂) die Laufzeit eines dritten Messsignals zwischen zweitem Sensor und erstem Sensor ist und dass der zeitliche Abstand t so gewählt wird, dass gilt: t = (TOF₁+TOF₂)/n, mit n = 1,2,3,... einer natürlichen Zahl.

5. Verfahren zum Messen mindestens einer Messgröße nach Anspruch 4,
**dadurch gekennzeichnet,**
**dass** die Laufzeiten (TOF₁) und (TOF₂) gemessen werden.

6. Verfahren zum Messen mindestens einer Messgröße nach Anspruch 4 oder 5,
**dadurch gekennzeichnet,**
**dass** der zeitliche Abstand t so gewählt wird, dass er ein ganzzahliges Vielfaches des Mittelwerts der Laufzeiten (TOF₁) und (TOF₂) ist.

7. Verfahren zum Messen mindestens einer Messgröße nach einem der Ansprüche 4 bis 6, **dadurch gekennzeichnet,**
**dass** der zeitliche Abstand t so bestimmt wird, der zeitliche Abstand t größer oder gleich der Hälfte der Wellenlänge λ der Ultraschallwelle ist.

8. Verfahren zum Messen mindestens einer Messgröße nach einem der Ansprüche 4 bis 7, **dadurch gekennzeichnet,**
**dass** die Laufzeit (TOF₁) des ersten Messsignals zwischen Aussenden des ersten Messsignals vom ersten Sensor und Empfangen des ersten Messsignals vom zweiten Sensor gemessen wird und/oder dass die Laufzeit (TOF₂) des dritten Messsignals zwischen Aussenden des dritten Messsignals vom zweiten Sensor und Empfangen des dritten Messsignals vom ersten Sensor gemessen wird.

9. Verfahren zum Messen mindestens einer Messgröße nach einem der Ansprüche 4 bis 8, **dadurch gekennzeichnet,**
**dass** die Laufzeit (TOF₁) des ersten Messsignals zwischen Aussenden des ersten Messsignals vom ersten Sensor und Empfangen des ersten Messsignals vom zweiten Sensor bestimmt wird zwischen den Zeitpunkten einer ersten Überschreitung eines vorgebbaren Schwellwerts des ersten Messsignals am ersten Sensor und einer ersten Überschreitung des Schwellwerts des ersten Messsignals am zweiten Sensor.

10. Verfahren zum Messen mindestens einer Messgröße nach einem der Ansprüche 4 bis 9, **dadurch gekennzeichnet,**
**dass** der zeitliche Abstand t des Messsignals zwischen Aussenden des ersten Messsignals vom ersten Sensor und Aussenden des zweiten Messsignals vom ersten Sensor (1) bestimmt wird zwischen den Zeitpunkten einer ersten Überschreitung eines bestimmten Schwellwerts des ersten Messsignals am ersten Sensor und einer ersten Überschreitung des Schwellwerts des zweiten Messsignals am ersten Sensor.

11. Verfahren zum Messen mindestens einer Messgröße nach einem der Ansprüche 4 bis 10, **dadurch gekennzeichnet,**
**dass** der zeitliche Abstand t des Messsignals zwischen Aussenden des ersten Messsignals vom ersten Sensor (1) und Aussenden des zweiten Messsignals vom ersten Sensor bestimmt wird gemäß einem Verfahren nach einem der Ansprüche 1 bis 3.

12. Verfahren zum Messen mindestens einer Messgröße nach einem der Ansprüche 1 bis 11, **dadurch gekennzeichnet,**
**dass** mittels des zeitlichen Abstands t und eines zeitlichen Abstands x zwischen Aussenden des zweiten Messsignals vom ersten Sensor und Empfangen eines Messsignals vom zweiten Sensor die Strömungsgeschwindigkeit eines Messmediums in einem Messrohr ermittelt wird.

## Claims

1. Procedure for measuring at least one measured variable with measuring signals in the form of ultrasonic signals, wherein a first sensor (1) emits a first measuring signal and, at a time interval t in relation to the first measuring signal, emits at least a second measuring signal, wherein at least a second sensor (2) receives the measuring signals,
**characterized in that**
the time interval t is selected in such a way that the amplitude of a measuring signal received by the second sensor (2) from the superposition of the second measuring signal and reflections of the first measuring signal is maximum,
wherein
the first measuring signal at the second sensor (2) is reflected to the first sensor (1) and is reflected back from the first sensor (1) to the second sensor (2), and **in that** the second measuring signal is superimposed with the first measuring signal reflected by the first sensor (1) to the second sensor (2).

2. Procedure designed to measure at least one measured variable as claimed in Claim 1,
**characterized in that**
the time interval t is varied over a predefined range.

3. Procedure designed to measure at least one measured variable as claimed in one of the Claims 1 or 2,
**characterized in that**
the sonic velocity of a medium is determined using the time interval t and/or the level of a medium in a vessel is determined using the time interval t.

4. Procedure designed to measure at least one measured variable as claimed in one of the Claims 1 to 3,
**characterized in that**
a time of flight (TOF₁) is the time of flight of the first measuring signal between the emission of the first measuring signal by the first sensor and the reception of the first measuring signal by the second sensor, and wherein the time of flight (TOF₂) is the time of flight of a third measuring signal between the second sensor and the first sensor, and **in that** the time interval t is selected in such a way that t in the formula t = (TOF₁+TOF₂)/n, with n = 1, 2, 3... is a natural number.

5. Procedure designed to measure at least one measured variable as claimed in Claim 4,
**characterized in that**
the times of flight (TOF₁) and (TOF₂) are measured.

6. Procedure designed to measure at least one measured variable as claimed in Claim 4 or 5,
**characterized in that**
the time interval t is selected in such a way that it is a whole-number multiple of the mean of the times of flight (TOF₁) and (TOF₂).

7. Procedure designed to measure at least one measured variable as claimed in one of the Claims 4 to 6,
**characterized in that**
the time interval t is determined in such a way that the time interval t is greater or equal to half of the wavelength λ of the ultrasonic wave.

8. Procedure designed to measure at least one measured variable as claimed in one of the Claims 4 to 7,
**characterized in that**
the time of flight (TOF₁) of the first measuring signal is measured between the emission of the first measuring signal by the first sensor and the reception of the first measuring signal by the second sensor and/or **in that** the time of flight (TOF₂) of the third measuring signal is measured between the emission of the third measuring signal by the second sensor and the reception of the third measuring signal by the first sensor.

9. Procedure designed to measure at least one measured variable as claimed in one of the Claims 4 to 8,
**characterized in that**
the time of flight (TOF₁) of the first measuring signal between the emission of the first measuring signal by the first sensor and the reception of the first measuring signal by the second sensor is determined by the time of a first overshooting of a predefinable threshold value of the first measuring signal at the first sensor and the time of a first overshooting of the threshold value of the first measuring signal at the second sensor.

10. Procedure designed to measure at least one measured variable as claimed in one of the Claims 4 to 9,
**characterized in that**
the time interval t of the measuring signal between the emission of the first measuring signal by the first sensor and the emission of the second measuring signal by the first sensor (1) is determined between the time of a first overshooting of a specific threshold value of the first measuring signal at the first sensor and the time of a first overshooting of the threshold value of the second measuring signal at the first sensor.

11. Procedure designed to measure at least one measured variable as claimed in one of the Claims 4 to 10,
**characterized in that**
the time interval t of the measuring signal between the emission of the first measuring signal by the first sensor (1) and the emission of the second measuring signal by the first sensor is determined according to a procedure as claimed in one of the Claims 1 to 3.

12. Procedure designed to measure at least one measured variable as claimed in one of the Claims 1 to 10,
**characterized in that**
the flow velocity of a medium in a measuring tube is determined using the time interval t and a time interval x between the emission of the second measuring signal by the first sensor and the reception of a measuring signal by the second sensor.

## Revendications

1. Procédé destiné à la mesure d'au moins une grandeur de mesure avec des signaux de mesure sous la forme de signaux ultrasonores, pour lequel un premier capteur (1) émet un premier signal de mesure et, à un intervalle de temps t par rapport au premier signal de mesure, émet au moins un deuxième signal de mesure, au moins un deuxième capteur (2) recevant les signaux de mesure, **caractérisé**
**en ce que** l'intervalle de temps t est choisi de telle sorte que l'amplitude d'un signal de mesure reçu par le deuxième capteur (2) à partir d'une superposition du deuxième signal de mesure et de réflexions du premier signal de mesure soit maximale, le premier signal de mesure étant réfléchi du deuxième capteur (2) vers le premier capteur (1) et de nouveau réfléchi du premier capteur (1) vers le deuxième capteur (1), et en ce que le deuxième signal de mesure est superposé avec le premier signal de mesure réfléchi par le premier capteur (1) vers le deuxième capteur (2).

2. Procédé destiné à la mesure d'au moins une grandeur de mesure selon la revendication 1,
**caractérisé**
**en ce que** l'intervalle de temps t est varié sur une plage prédéfinie.

3. Procédé destiné à la mesure d'au moins une grandeur de mesure selon l'une des revendications 1 ou 2,
**caractérisé**
**en ce qu'**est déterminée, au moyen de l'intervalle de temps t, la vitesse du son d'un produit mesuré et/ou qu'est déterminé, au moyen de l'intervalle de temps t, le niveau d'un produit mesuré dans un réservoir.

4. Procédé destiné à la mesure d'au moins une grandeur de mesure selon l'une des revendications 1 à 3,
**caractérisé**
**en ce qu'**un temps de propagation (TOF₁) est le temps de propagation du premier signal de mesure entre l'émission du premier signal de mesure par le premier capteur et la réception du premier signal de mesure par le deuxième capteur, et en ce qu'un temps de propagation (TOF₂) est le temps de propagation d'un troisième signal de mesure entre le deuxième capteur et le premier capteur, et en ce que l'intervalle de temps t est choisi de telle sorte que t - dans la formule t = (TOF₁+TOF₂)/n, avec n = 1, 2, 3... - est un nombre naturel.

5. Procédé destiné à la mesure d'au moins une grandeur de mesure selon la revendication 4,
**caractérisé**
**en ce que** les temps de propagation (TOF₁) et (TOF₂) sont mesurés.

6. Procédé destiné à la mesure d'au moins une grandeur de mesure selon la revendication 4 ou 5,
**caractérisé**
**en ce que** l'intervalle de temps t est choisi de telle sorte à être un multiple entier de la valeur moyenne des temps de propagation (TOF₁) et (TOF₂).

7. Procédé destiné à la mesure d'au moins une grandeur de mesure selon l'une des revendications 4 à 6,
**caractérisé**
**en ce que** l'intervalle de temps t est déterminé de telle sorte que l'intervalle de temps t soit supérieur ou égal à la demi-longueur d'onde λ de l'onde ultrasonore.

8. Procédé destiné à la mesure d'au moins une grandeur de mesure selon l'une des revendications 4 à 7,
**caractérisé**
**en ce qu'**est mesuré le temps de propagation (TOF₁) du premier signal de mesure entre l'émission du premier signal de mesure par le premier capteur et la réception du premier signal de mesure par le deuxième capteur et/ou en ce qu'est mesuré le temps de propagation (TOF₂) du troisième signal de mesure entre l'émission du troisième signal de mesure par le deuxième capteur et la réception du troisième signal de mesure par le premier capteur.

9. Procédé destiné à la mesure d'au moins une grandeur de mesure selon l'une des revendications 4 à 8,
**caractérisé**
**en ce que** le temps de propagation (TOF₁) du premier signal de mesure entre l'émission du premier signal de mesure par le premier capteur et la réception du premier signal de mesure par le deuxième capteur est déterminé entre les instants d'un premier dépassement d'une valeur seuil prédéfinissable du premier signal de mesure sur le premier capteur et d'un premier dépassement de la valeur seuil du premier signal de mesure sur le deuxième capteur.

10. Procédé destiné à la mesure d'au moins une grandeur de mesure selon l'une des revendications 4 à 9,
**caractérisé**
**en ce que** l'intervalle de temps t du signal de mesure entre l'émission du premier signal de mesure par le premier capteur et l'émission du deuxième signal de mesure par le premier capteur (1) est déterminé entre les instants d'un premier dépassement d'une valeur seuil définie du premier signal de mesure sur le premier capteur et d'un premier dépassement de la valeur seuil du deuxième signal de mesure sur le premier capteur.

11. Procédé destiné à la mesure d'au moins une grandeur de mesure selon l'une des revendications 4 à 10,
**caractérisé**
**en ce que** l'intervalle de temps t du signal de mesure entre l'émission du premier signal de mesure par le premier capteur (1) et l'émission du deuxième signal de mesure par le premier capteur est déterminé au moyen d'un procédé selon l'une des revendications 1 à 3.

12. Procédé destiné à la mesure d'au moins une grandeur de mesure selon l'une des revendications 1 à 11,
**caractérisé**
**en ce qu'**est déterminée, au moyen de l'intervalle de temps t et d'un intervalle de temps x entre l'émission du deuxième signal de mesure par le premier capteur et la réception d'un signal de mesure par le deuxième capteur, la vitesse d'écoulement d'un produit mesuré dans un tube de mesure.
